# EUROPÄISCHE PATENTSCHRIFT

(11) **EP 2 875 899 B1**
(45) Veröffentlichungstag und Bekanntmachung des Hinweises auf die Patenterteilung: **20.04.2016**
(21) Anmeldenummer: 13193904.3
(22) Anmeldetag: 21.11.2013
(51) Int. Cl.: B23Q 17/09, B21D 37/00

(54) **Kontrolleinrichtung, Werkzeug und Verfahren zum Kontrollieren eines Bruchs eines in einem Werkzeug einer Stanzmaschine aufgenommenen Bearbeitungswerkzeugs**
Monitoring device, tool, and method for monitoring a fracture in a punching machine tool mounted in a machining tool
Dispositif de contrôle, outil, et procédé de contrôle d'une cassure d'un outil d'usinage logé dans un outil d'une poinçonneuse

(43) Veröffentlichungstag der Anmeldung: 27.05.2015
(73) Patentinhaber: TRUMPF Werkzeugmaschinen GmbH + Co. KG, 71254 Ditzingen (DE)
(72) Erfinder: Bytow, Peter, 75397 Simmozheim (DE)
(74) Vertreter: Prüfer & Partner mbB Patentanwälte · Rechtsanwälte

(56) Entgegenhaltungen:
- WO-A2-2009/112804
- DE-A1-102004 002 593
- DE-A1-102006 031 825
- DE-A1-102006 041 282

## Beschreibung

Die Erfindung betrifft eine Kontrolleinrichtung und ein Verfahren zum Kontrollieren eines Bruchs eines Werkzeug einer Stanzmaschine, insbesondere eine Kontrolleinrichtung und ein Verfahren, die es ermöglichen, zu kontrollieren, ob ein in dem Werkzeug aufgenommenes Bearbeitungswerkzeug gebrochen ist.

Es sind Kontrolleinrichtungen für eine Bruchkontrolle von Gewindeschneidern bekannt, bei denen beispielsweise durch den Gewindeschneider ein Betätiger bewegt wird, der entweder ein Ventil schaltet oder dessen Bewegung über einen Näherungsschalter erfasst wird. In anderen Kontrolleinrichtungen sind optische Sensoren vorgesehen, um die Spitze eines Gewindeschneiders zu erfassen, um zu erkennen, ob der Gewindeschneider gebrochen ist.

Dazu müssen aber entweder aufwändige Schaltungen vorgesehen werden, und/oder angebrochene Gewindeschneider können nicht erkannt werden.

Dokument DE 10 2006 031 825 A1 offenbart ein Kontrollverfahren an Werkzeugmaschinen und ein Werkzeug zur Durchführung des Verfahrens. Das Werkzeug weist einen feststehenden Stempel für eine Kaltverformung eines Werkstücks und einen gegenüber dem Stempel axial beweglichen Abstreifer auf. Der Stempel und der Abstreifer sind in einem Raum angeordnet und ragen in Bearbeitungsrichtung aus dem Raum heraus. Zwischen dem Stempel und dem Abstreifer ist ein Ringspalt vorgesehen, der mit dem Raum verbunden ist. In dem Raum ist ein Kontrollmedium vorgesehen, wobei sich über eine Änderung eines Drucks in dem Raum bzw. einer Strömung durch den Ringspalt Ausbrüche an einer Matrize oder Schäden an dem Stempel oder dem Abstreifer erfassen lassen.

Die Aufgabe der vorliegenden Erfindung liegt nun darin, ein Verfahren und eine Kontrolleinrichtung für ein Werkzeug einer Stanzmaschine bereitzustellen, die einfach aufgebaut ist und einen Bruch oder eine Anbrechen eines in dem Werkzeug aufgenommenen Bearbeitungswerkzeugs zuverlässig erkennt.

Die Aufgabe wird durch eine Kontrollvorrichtung gemäß Anspruch 1 und ein Werkzeug gemäß Anspruch 4 gelöst. Ein Verfahren zum Überwachen eines Bruchs des Bearbeitungswerkzeugs ist in Anspruch 10 enthalten. Weiterentwicklungen der Erfindung sind Gegenstand der abhängigen Ansprüche.

Über eine Hubbewegung eines Tastkolbens wird mittels einer Kolbenstange erfasst, ob ein Bearbeitungswerkzeug erforderliche Abmessungen aufweist. Bei vorgeschädigten Bearbeitungswerkzeugen kann durch die Kraft, die die Kolbenstange auf das Bearbeitungswerkzeug ausübt, und eine Position bzw. einen Weg der Kolbenstange eine Vorschädigung durch einen endgültigen Bruch erfasst werden. Die Kontrolleinrichtung ist einfach aufgebaut, da nur eine Leitung zur Versorgung des Kontrollzylinders erforderlich ist.

Die Erfindung wird anhand eines Ausführungsbeispiels erläutert.

Insbesondere zeigen
- Fig. 1: eine Stanzmaschine mit einem Werkzeug mit einer erfindungsgemäßen Kontrolleinrichtung;
- Fig. 2: eine vergrößerte Querschnittsansicht eines Kontrollzylinders der Kontrolleinrichtung;
- Fig. 3: den Kontrollzylinder in dem Werkzeug in einer Situation, in der ein Bearbeitungswerkzeug nicht gebrochen ist; und
- Fig. 4: den Kontrollzylinder in dem Werkzeug in einer Situation, in der das Bearbeitungswerkzeug gebrochen ist.

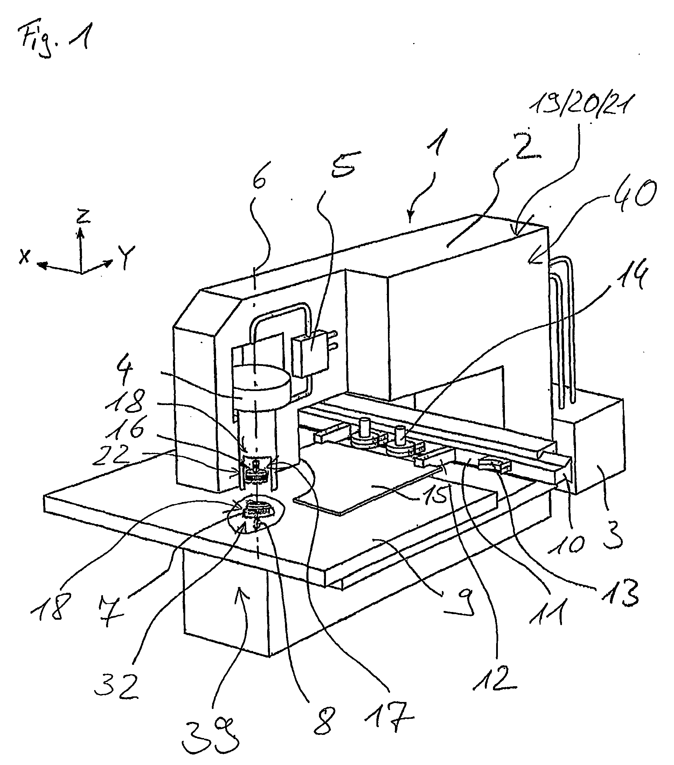

In Fig. 1 ist eine Stanzmaschine 1 mit einem erfindungsgemäßen Werkzeugsatz dargestellt. Ein Bestandteil der Stanzmaschine 1 ist hier ein C-Rahmen 2. Der C-Rahmen 2 besteht aus einer torsionssteifen Schweißkonstruktion aus Stahl. Der Rahmen kann aber auch in einer anderen Form ausgeführt sein.

Am hinteren Ende des C-Rahmens 2 ist ein Hydraulikaggregat 3 vorgesehen, mit dem ein Stößel 4 über eine Stößelsteuerung 5 hydraulisch angetrieben wird.

Die Stanzmaschine weist eine Achse 6 auf, welche die Mittelachse einer unteren Werkzeugaufnahme 7 und des Stößels 4 mit einer oberen Werkzeugaufnahme 17 ist. Die untere Werkzeugaufnahme 7 ist auf der unteren Innenseite des C-Rahmens 2 zum Aufnehmen eines Werkzeugunterteils 32, das ein Werkzeugteil eines Werkzeugs 14 ist, vorgesehen. Die untere Werkzeugaufnahme 7 ist optional über einen nicht gezeigten Drehantrieb drehbar und in jeder beliebigen Winkellage feststellbar. Weiterhin weist die untere Werkzeugaufnahme 7 optional einen Antrieb 8 auf, der die untere Werkzeugaufnahme 7 entlang der Achse 6 bewegt. Der Antrieb 8 kann so angesteuert werden, dass er innerhalb seines Antriebswegs an jeder beliebigen Position anhält, und dann vor oder zurück fährt.

Der Stößel 4 ist auf der oberen Innenseite des C-Rahmens 2 vorgesehen. Der Stößel 4 mit der oberen Werkzeugaufnahme 17 nimmt ein Werkzeugoberteil 16 als Werkzeugteil des Werkzeugs 14 formschlüssig und spielfrei auf. Der Stößel 4 ist ebenfalls optional drehbar und kann in jeder beliebigen Winkellage festgestellt werden. Dafür ist ein zweiter, nicht gezeigter Drehantrieb vorhanden. Auch der Stößel 4 kann, angesteuert durch die Stößelsteuerung 5, an jeder beliebigen Position innerhalb seines Hubwegs entlang der Achse 6 angehalten werden, und dann nach oben oder nach unten weiterbewegt werden.

Sämtliche Aktoren, wie z.B. die Drehantriebe, die Stößelsteuerung 5 und der Antrieb 8 der unteren Werkzeugaufnahme 7 werden von einer Steuerungsvorrichtung 40 gesteuert. Die Steuerungsvorrichtung 40 weist als Ein- und Ausgabemittel eine Tastatur und einen Monitor auf. Die Steuerungsfunktionen werden von Mikrocontrollern ausgeführt. Bearbeitungsprogramme und Betriebsparameter sind in einem Speicherbereich der Steuerungsvorrichtung 40 abgespeichert.

Auf der unteren Innenseite des C-Rahmens 2 ist ein Maschinentisch 9 angeordnet, der eine Querschiene 10 mit einem Werkzeugmagazin 11 aufweist. An der Querschiene 10 sind Spannpratzen 12 zum Festhalten einer Blechplatte 15 angeordnet. Die Spannpratzen 12 können an geeigneten Stellen auf der Querschiene 10 befestigt werden, und können so versetzt werden, dass die Blechplatte 15 sicher gehalten wird, aber die Blechplatte 15 nicht an einer zu bearbeitenden Fläche gegriffen wird. In dem Werkzeugmagazin 11 sind mehrere, hier drei, Werkzeugaufnahmen 13 für mehrere, hier zwei, Werkzeuge 14 vorhanden.

Die Stanzmaschine 1 ist ferner mit Mitteln zum Festhalten der Werkzeugteile in der oberen und unteren Werkzeugaufnahme 7, 17 versehen. Optional sind Spannzylinder 18 dafür vorgesehen, wobei entweder nur in einer von der oberen oder unteren Werkzeugaufnahme 7, 17 ein Spannzylinder vorgesehen ist, oder in beiden.

Weiterhin weist die Stanzmaschine 1 eine Druckluftversorgungseinrichtung 19 auf. Die Druckluftversorgungseinrichtung 19 stellt Luft mit einem gegenüber einem Luftdruck der Umgebung der Stanzmaschine 1 erhöhten Druck bereit. In der Druckluftversorgungseinrichtung 19 sind zwei Druckschalter mit einem jeweils vorbestimmbaren Umschaltdruck vorgesehen, der in Abhängigkeit von dem an dem jeweiligen Druckschalter anliegenden Luftdruck zwischen zwei Schaltzuständen umschaltet. Ein erster Druckschalter 20 ist vorgesehen, der wie später beschrieben verwendet wird. Weiterhin ist ein zweiter Druckschalter 21 vorgesehen, der umschaltet, wenn über eine optionale Abfrageeinrichtung 22 erfasst wird, dass das jeweilige Werkzeugteil in der oberen oder unteren Werkzeugaufnahme 7, 17 aufgenommen und gespannt ist. Wenn das jeweilige Werkzeugteil in der oberen oder unteren Werkzeugaufnahme 7, 17 aufgenommen und gespannt ist, wird eine Versorgungsleitung zu dem zweiten Druckschalter 21 verschlossen bzw. mit einer nachstehend erläuterten Leitung innerhalb des Werkzeugteils verbunden. Wenn das jeweilige Werkzeugteil dort nicht vorhanden ist, strömt die Luft aus der Versorgungsleitung und der Luftdruck in der Versorgungsleitung fällt ab. Die Abfrageeinrichtung 22 und der zweite Druckschalter 21 sind optional parallel zu dem ersten Druckschalter 20 mit der Druckluftversorgungseinrichtung 19 verbunden.

Die Druckluftversorgungseinrichtung 19 kann alternativ auch separat vorgesehen sein. Sie ist nicht zwingend in der Stanzmaschine 1 vorgesehen.

Optional ist die Stanzmaschine 1 mit einer Absaugvorrichtung 39 versehen, die es ermöglicht, Späne aus dem Werkzeug 14 und aus der Umgebung des Werkzeugs 14 abzusaugen.

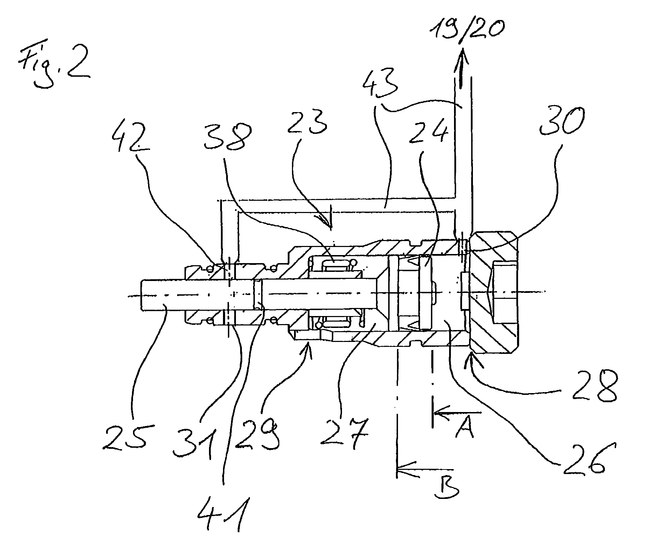

Fig. 2 ist eine vergrößerte Querschnittsansicht eines Kontrollzylinders 23 einer Kontrolleinrichtung zur Kontrolle eines Bruchs eines in dem Werkzeug aufgenommenen Bearbeitungswerkzeugs 33.

Der Kontrollzylinder 23 weist einen Tastkolben 24 auf, der mit einer Kolbenstange 25 versehen ist. Der Kontrollzylinders 23 weist weiterhin einen Innenraum auf, der sich von einem ersten Ende 28 zu einem zweiten Ende 29 des Kontrollzylinders 23 erstreckt. Der Innenraum ist durch den beweglichen Tastkolben 24 in einen ersten Raum 26 zwischen dem Tastkolben 24 und dem ersten Ende 28 des Kontrollzylinders 23 und einen zweiten Raum 27 zwischen dem Tastkolben 24 und dem zweiten Ende 29 des Kontrollzylinders 23 unterteilt. Die Kolbenstange 25 ist in dem Kontrollzylinder 23 gelagert, so dass sie an dem zweiten Ende 29 aus dem Kontrollzylinder 23 austritt, und der Tastkolben 24 hat einen vorbestimmten Hubweg zwischen dem ersten Ende 28 und dem zweiten Ende 29. Der Kontrollzylinder 23 weist ferner eine Druckfeder 38 auf, die den Tastkolben 24 in Richtung des ersten Endes 28 drängt.

Der Kontrollzylinder 23 ist mit einer Versorgungsöffnung 30 und einer Abblasöffnung 31 versehen. Die Versorgungsöffnung 30 ist an dem ersten Ende 28 des Kontrollzylinders 23 vorgesehen. Sie ist über eine Versorgungsleitung 43 mit dem ersten Druckschalter 20 der Druckluftversorgungseinrichtung 19 verbunden. Der Kontrollzylinder 23 weist die Abblasöffnung 31 in einem solchen Bereich auf, dass sie mit dem ersten Raum 26 verbunden werden kann. Die Abblasöffnung 31 ist hier im Gehäuse des Kontrollzylinders 23 vorgesehen. Alternativ kann die Abblasöffnung auch an einer anderen Stelle, beispielsweise in dem Werkzeugteil, vorgesehen sein. Bezüglich der Kolbenstange 25 ist gegenüberliegend von der Abblasöffnung 31 eine weitere Öffnung 42 vorgesehen, die über die Versorgungsleitung 43 mit der Druckluftversorgungseinrichtung 19 und dem Druckschalter 20 und auch mit der Versorgungsöffnung 30 des Kontrollzylinders 23 verbunden ist.

Die Kolbenstange 25 weist eine Aussparung 41 in Form einer umlaufenden, radialen Nut auf. Bei einer alternativen Ausführungsform sind die Öffnung 42 und die Abblasöffnung 31 beispielsweise nicht gegenüber sondern axial nebeneinander angeordnet, so dass die Aussparung in der Kolbenstange 25 eine axiale Vertiefung ist.

In einer Position, in der die Kolbenstange 25 des Tastkolbens 24 an der Spitze eines unbeschädigten Bearbeitungswerkzeugs 33 anstößt, ergibt sich für den Tastkolben 24 eine Grenzposition innerhalb seines Hubwegs. Die Aussparung 41 ist in der Kolbenstange 25 so angeordnet und ausgebildet, dass die Aussparung 41 die Öffnung 42 und die Abblasöffnung 31 nicht verbindet, wenn der Tastkolben 24 in der Grenzposition oder vom zweiten Ende 29 weiter entfernt als die Grenzposition ist. Somit ist eine Verbindung der Abblasöffnung 31 mit dem ersten Raum 26 unterbrochen. Wenn der Tastkolben 24 näher an dem zweiten Ende 29 als die Grenzposition ist, ist die Aussparung 41 so angeordnet und ausgebildet, dass sie die Öffnung 42 und die Abblasöffnung 31 verbindet.

Die Abblasöffnung 31 ist mit der Umgebung, oder alternativ mit anderen pneumatischen Komponenten, wie z.B. einem Druckspeicher, verbunden, so dass die Luft mit dem gegenüber der Umgebung erhöhten Druck durch die Versorgungsöffnung 30, die Versorgungsleitung 43 des Kontrollzylinders 23, die Öffnung 42, die Aussparung 41 und die Abblasöffnung 31 aus dem ersten Raum 26 des Kontrollzylinders 23 ausströmen kann.

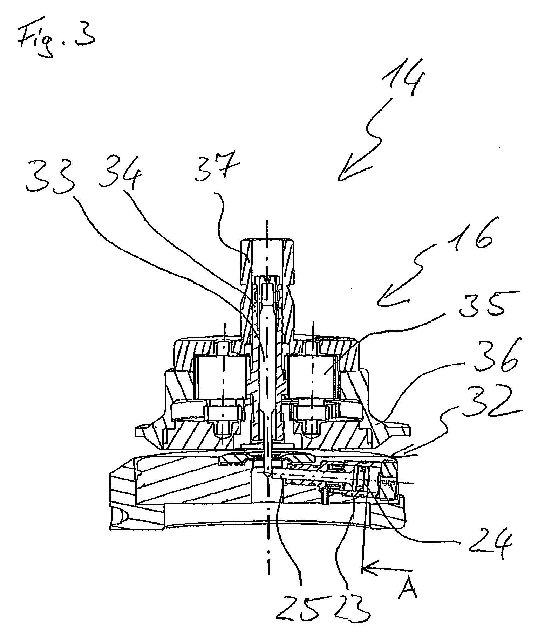

Fig. 3 zeigt den Kontrollzylinder 23 in dem Werkzeug 14 in einer Situation, in der ein Bearbeitungswerkzeug 33 des Werkzeugs 14 nicht gebrochen ist.

Das Bearbeitungswerkzeug 33 ist in dem Werkzeugoberteil 16 des Werkzeugs 14 vorgesehen. Das Bearbeitungswerkzeug 33 ist hier ein Gewindeformer, kann alternativ aber auch ein Gewindebohrer oder beispielsweise auch ein Präzisionsbohrer sein.

Das Werkzeugoberteil 16 weist eine Stempelaufnahme 37 und ferner eine Leitspindel 34, Zahnräder 35 und einen Zahnkranz 36 auf. Durch die Leitspindel 34, die Zahnräder 35 und den Zahnkranz 36 kann das Bearbeitungswerkzeug 33 relativ zu der Stempelaufnahme 37 ausgefahren werden, wenn in den Zahnkranz 36 eine zu der Stempelaufnahme 37 relative Drehung eingeleitet wird. Alternativ ist ein Ausfahren des Bearbeitungswerkzeugs 33 nicht vorgesehen oder wird über eine andere Mechanik bereitgestellt.

In dem Werkzeugunterteil 32 ist der Kontrollzylinder 23 vorgesehen. Der Kontrollzylinder 23 ist so angeordnet, dass seine Achse auf die vordere Spitze des unbeschädigten Bearbeitungswerkzeugs 33 gerichtet ist. Die Kolbenstange 25 des Tastkolbens 24 stößt also an der vorderen Spitze des unbeschädigten Bearbeitungswerkzeugs 33 an, wenn der Tastkolben in Richtung des zweiten Endes 29 (siehe Fig. 2) des Kontrollzylinders 23 ausgefahren wird.

Auch in Fig. 2 ist bereits die Situation gezeigt, in der der Tastkolben 24 an der Spitze des unbeschädigten Bearbeitungswerkzeugs 33 anstößt. Der Tastkolben 24 befindet sich daher auch hier in der Grenzposition. Eine Anordnung der Aussparung 41 in der Kolbenstange 25 ist somit so gewählt, dass sie die Abblasöffnung 31 mit der Öffnung 42 und somit mit dem ersten Raum 26 in der Grenzposition des Tastkolbens 24 nicht verbindet, was angibt, dass kein Bruch des Bearbeitungswerkzeugs 33 vorliegt.

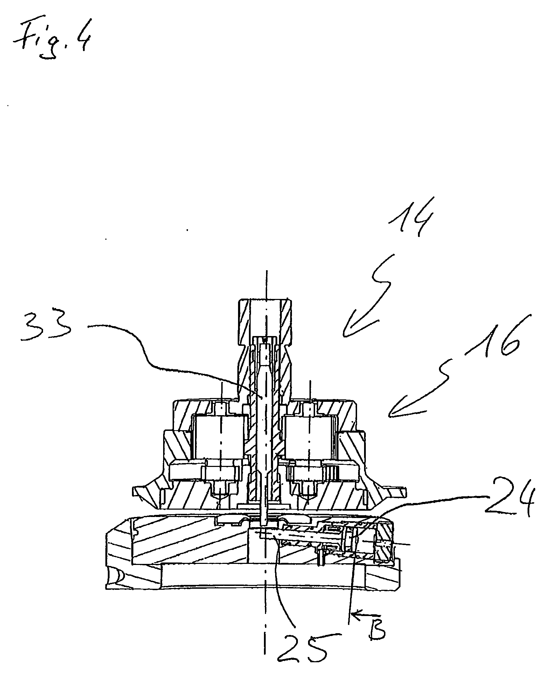

In Fig. 4 ist die Situation gezeigt, in der das Bearbeitungswerkzeug 33 in dem Werkzeugoberteil 16 des Werkzeugs 14 gebrochen ist. Die Kolbenstange 25 des Tastkolbens 24 stößt hier nicht an der Spitze des Bearbeitungswerkzeugs 33 an. Dadurch befindet sich der Tastkolben 24 in einer Position, die näher dem zweiten Ende 29 ist als die Grenzposition. Die Anordnung und Ausführung der Aussparung 41 in der Kolbenstange 25 ist somit so gewählt, dass sie in dieser Position des Tastkolbens 24 die Abblasöffnung 31 mit der Öffnung 42 und somit mit dem ersten Raum 26 verbindet.

Das Bearbeitungswerkzeug 33 ist in der vorliegenden Ausführungsform in dem Werkzeugoberteil 16, und der Kontrollzylinder 23 mit dem Tastkolben 24 ist in dem Werkzeugunterteil 32 vorgesehen. In alternativen Ausführungsformen ist das Bearbeitungswerkzeug in dem Werkzeugunterteil und der Kontrollzylinder mit dem Tastkolben in dem Werkzeugoberteil vorgesehen. In einer weiteren Alternative sind das Bearbeitungswerkzeug und der Kontrollzylinder mit dem Tastkolben in demselben der Werkzeugteile vorgesehen.

Im Betrieb fährt der Maschinentisch 9 zum Stanzen gemeinsam mit der Querschiene 10, an der die Spannpratzen 12 befestigt sind, mit denen das Blech 15 gehalten wird, in einer Y-Richtung in eine programmierte Position und die Querschiene 10 fährt in X-Richtung in die programmierte Position, wobei das Blech 15 über den Maschinentisch 9 gleitet. Dann wird von dem Stößel 4 ein Stanzhub durchgeführt. Im Anschluss daran wird nach demselben Prinzip die nächste Stanz- oder Bearbeitungsposition angefahren.

Die Werkzeuge 14 werden automatisch, durch die Maschinensteuerungsvorrichtung 40 angesteuert, gewechselt. Dazu fährt die Querschiene 10, angetrieben von einem nicht gezeigten Antrieb, zum Einwechseln der Werkzeuge 14 aus dem Werkzeugmagazin 11 in eine Position in einer X-Richtung, so dass die X-Position des einzuwechselnden Werkzeugs 14 der X-Position der unteren Werkzeugaufnahme 7 entspricht. Die Querschiene 10 fährt dann gemeinsam mit dem Maschinentisch 9, von einem weiteren Antrieb angetrieben, in eine Position in der Y-Richtung, in der eine Achse des Werkzeugs 14 mit der Mittelachse 6 der unteren Werkzeugaufnahme 7 und dem Stößel 4 übereinstimmt, so dass das Werkzeug 14 in die untere Werkzeugaufnahme 7 und in die Werkzeugaufnahme 17 des Stößels 4 aufgenommen werden kann. Sofern in der Werkzeugaufnahme 17 des Stößels 4 und in der unteren Werkzeugaufnahme 7 ein Werkzeug 14 vorhanden ist, wird dieses vorher an einen freien Platz im Werkzeugmagazin 11 abgegeben.

Am Schluss der Bearbeitung mit dem Bearbeitungswerkzeug 33 und vor dem Auswechseln des Werkzeugs 14 wird durch den Maschinentisch 9 eine horizontale Abfrageposition in der X- und Y-Richtung angefahren. In dieser Abfrageposition ist der Maschinentisch 9 in einer Position, so dass das Bearbeitungswerkzeug 33 in dem Werkzeugoberteil 16 ohne Kollision in das Werkzeugunterteil 32 eintreten kann. Dann wird der Stößel 4 in eine Hubposition (Werkzeugaufnahme-Abfrageposition) gefahren, so dass das Bearbeitungswerkzeug 33, optional in Verbindung mit einem Ausfahren des Bearbeitungswerkzeugs 33 relativ zu der Stempelaufnahme 37, in eine vertikale Abfrageposition gebracht wird. Das relative Ausfahren erfolgt durch die Leitspindel 34, die Zahnräder 35 und den Zahnkranz 36 auf Grund eines Einleitens einer Drehbewegung in den Zahnkranz 36. Alternativ ist ein Anfahren einer speziellen Abfrageposition des Bearbeitungswerkzeugs 33 nicht erforderlich, sofern der Kontrollzylinder 23 in demselben Werkzeugteil 16, 32 wie das Bearbeitungswerkzeug 33 vorgesehen ist oder alternativ das Werkzeugteil 16, 32 mit dem Kontrollzylinder 23 in eine Abfrageposition bewegbar ist.

Anschließend wird der Kontrollzylinder 23 durch die Druckluftversorgungseinrichtung 19 mit Hilfe von entsprechenden Ventilen mit Luft mit einem Druck von ca. 2,5 - 3,0 bar beaufschlagt. Die Luft mit dem gegenüber der Umgebung erhöhten Druck strömt durch die Versorgungsöffnung 30 in den ersten Raum 26. Durch die Luft mit dem erhöhten Druck wird der Tastkolben 24 ausgefahren, das heißt in Richtung des zweiten Endes 29 bewegt, so dass die Kolbenstange 25 ausgefahren wird.

Nach einem Verstreichen einer vorbestimmten Zeitdauer wird dann eine Schaltstellung des ersten Druckschalters 20 abgefragt, nämlich ob ein Schaltdruck von hier beispielsweise 1,7 bis 1,8 bar nicht unterschritten ist.

Der Schaltdruck wird dann nicht unterschritten, wenn die Kolbenstange 25 beim Ausfahren an das unbeschädigte Bearbeitungswerkzeug 33 anstößt, so dass der Tastkolben 24 die Grenzposition annimmt. Die Abblasöffnung 31 ist dann mit dem ersten Raum 26 nicht verbunden, so dass die Luft darin nicht abgeblasen werden kann bzw. der gegenüber der Umgebung erhöhte Druck in der Versorgungsleitung 43 des Kontrollzylinders 23 bestehen bleibt, an dem ersten Druckschalter 20 anliegt und dessen Schaltdruck nicht unterschritten ist.

Wenn das Bearbeitungswerkzeug 33 gebrochen ist, so dass die Kolbenstange 25 nicht daran anstößt, wird der Schaltdruck andernfalls unterschritten. Der Tastkolben 24 mit der Kolbenstange 25 fährt nämlich dann soweit aus, dass die Abblasöffnung 31 über die Aussparung 41, die Öffnung 42 und die Versorgungsleitung 43 des Kontrollzylinders 23 mit dem ersten Raum 26 verbunden wird. Dadurch strömt die Luft aus dem ersten Raum 26 über die Versorgungsleitung 43 des Kontrollzylinders 23, die Öffnung 42, die Aussparung 41 und durch die Abblasöffnung 31 in die Umgebung bzw. der Druck in dem ersten Raum 26 und der Versorgungsleitung 43 bis hin zum ersten Druckschalter 21 verringert sich auf einen Druck unterhalb des Schaltdrucks.

Somit ist es möglich, den Ausfahrweg des Tastkolbens 24 mit der Kolbenstange 25 über den in dem ersten Raum 26 vorliegenden Druck abzufragen. Alternativ ist auch eine Abfrage des Ausfahrwegs des Tastkolbens beispielsweise über Reedkontakte oder Lichtschranken möglich.

Sofern das Bearbeitungswerkzeug 33 nicht gebrochen ist, und eine vorbestimmte Zeit nach dem Anlegen des erhöhten Drucks verstrichen ist, wird das Ventil geschlossen und der Tastkolben 24 mit der Kolbenstange 25 fährt auf Grund der Kraft der Druckfeder 38 wieder zu dem ersten Ende 28 in eine Grundstellung. Ein Werkzeugwechselvorgang wird dann entweder gestartet oder fortgesetzt.

Sofern das Bearbeitungswerkzeug 33 gebrochen ist, wird der Werkzeugwechselvorgang entweder nicht begonnen oder abgebrochen, eine Fehlermeldung oder ein Warnhinweis wird ausgegeben und ein Maschinenbediener ergreift entsprechende Schritte, um das gebrochene Bearbeitungswerkzeug 33 auszuwechseln.

In dem Fall, in dem die Abfrageeinrichtung 22 parallel zu dem Kontrollzylinder 23 mit der Druckluftversorgungseinrichtung 19 über ein Ventil verbunden ist, wird die Abfrageeinrichtung 22 gleichzeitig mit der Luft mit dem erhöhtem Druck versorgt und das Spannen der Werkzeugteile in den Werkzeugaufnahmen 7, 17 kann dadurch überwacht werden. Ferner besteht auch optional die Möglichkeit, über die Abfrageeinrichtung 22 festzustellen, ob die Werkzeugteile richtig in den Werkzeugaufnahmen 7, 17 aufgenommen sind ("Matrize vorhanden"), wobei die Abfrageeinrichtung 22 und der Kontrollzylinder 23 über das gleiche Ventil gleichzeitig mit der Luft mit dem erhöhten Druck versorgt werden. Grundsätzlich besteht hier die Möglichkeit, mittels eines Ventils und zwei Druckschaltern die Überprüfung, ob die Werkzeugteile in den Werkzeugaufnahmen 7, 17 vorhanden sind, ob sie richtig gespannt sind und ob das Bearbeitungswerkzeug 33 gebrochen ist, ausgeführt werden. Der Druckschalter 20 weist hier einen Umschaltdruck von 1,7 bar auf und der Druckschalter 21 weist einen Umschaltdruck von 1,0 bar auf. Wenn nach der Druckbeaufschlagung in den Versorgungsleitungen ein Druck von 2,5 bar bis 3,0 bar vorhanden ist, der Schaltdruck der Druckschalter 20, 21 also nicht unterschritten wird, zeigt dies hier, dass die Werkzeugteile in den Werkzeugaufnahmen 7, 17 vorhanden sind, dass sie richtig gespannt sind, und dass das Bearbeitungswerkzeug 33 nicht gebrochen ist. Wenn der Druck in den Versorgungsleitungen hier 1,7 bar unterschreitet, aber oberhalb von 1,0 bar ist, also der Schaltdruck des Druckschalters 20 unterschritten wird, aber der Schaltdruck des Druckschalters 21 nicht unterschritten wird, zeigt dies, dass die Werkzeugteile in den Werkzeugaufnahmen 7, 17 vorhanden sind und richtig gespannt sind, aber dass das Bearbeitungswerkzeug 33 gebrochen ist. Wenn der Schaltdruck des Druckschalters 21 ebenfalls unterschritten wird, zeigt dies hier, dass die Werkzeugteile in den Werkzeugaufnahmen 7, 17 nicht vorhanden oder nicht richtig gespannt sind.

Optional bleibt die Absaugvorrichtung 39 zum Absaugen der Späne in Betrieb oder wird zugeschaltet, um Späne in dem Werkzeug abzusaugen, so dass die Kontrolle des Bearbeitungswerkzeugs 33 nicht beeinträchtigt oder verfälscht wird.

Die Kontrolle des Bruchs des Bearbeitungswerkzeugs 33 findet alternativ nicht unmittelbar vor dem Auswechseln des Werkzeugs statt, sondern kann auch am Anfang eines Bearbeitungszyklus mit dem Bearbeitungswerkzeug 33 oder während des Bearbeitungszyklus in vorbestimmten Abständen erfolgen.

Bei einer entsprechenden Anordnung, Größe und Form der Kolbenstange 25 können nicht nur das Abbrechen des Gewindeschneiders, Gewindeformers oder des Bohrers kontrolliert werden, sondern auch Ausbrüche dieser Bearbeitungswerkzeuge oder das Ab- oder Ausbrechen von anderen Werkzeugelementen können kontrolliert werden.

## Patentansprüche

1. Kontrolleinrichtung für ein Werkzeug in einer Stanzmaschine (1) zur Kontrolle eines Bruchs eines in dem Werkzeug aufgenommenen Bearbeitungswerkzeugs (33), aufweisend:
eine Druckluftversorgungseinrichtung (19),
einen ersten Druckschalter (20) mit einem vorbestimmbaren Umschaltdruck, und
einen Kontrollzylinder (23) mit einem Tastkolben (24),
wobei
der Tastkolben (24) eine Kolbenstange (25) aufweist,
der Tastkolben (24) so in dem Kontrollzylinder (23) aufgenommen ist, dass er einen ersten Raum (26) zwischen dem Tastkolben (24) und einem ersten Ende (28) des Kontrollzylinders (23) und einen zweiten Raum (27) zwischen dem Tastkolben (24) und einem zweiten Ende (29) des Kontrollzylinders (23) unterteilt,
der Tastkolben (24) einen vorbestimmten Hubweg in dem Kontrollzylinder (23) zwischen dem ersten Ende (28) und dem zweiten Ende (29) hat, und
für den Tastkolben (24) eine Grenzposition vorgesehen ist, in der die Kolbenstange (25) an dem Bearbeitungswerkzeug (33) anstößt,
wobei der erste Raum (26) eine Versorgungsöffnung (30) hat, die mit der Druckluftversorgungseinrichtung (19) und dem ersten Druckschalter (20) verbunden ist, und der Kontrollzylinder (23) eine Abblasöffnung (31) hat, wobei
die Abblasöffnung (31) so angeordnet ist,
dass sie mit dem ersten Raum (26) eine Verbindung aufweist, wenn sich der Tastkolben (24) in einer Position befindet, die bei einem Bruch des Bearbeitungswerkzeugs (33) näher an dem zweiten Ende (29) ist als die Grenzposition, und
dass ihre Verbindung mit dem ersten Raum (26) unterbrochen ist, wenn sich der Tastkolben (24) in der Grenzposition befindet, oder von dem zweiten Ende (29) weiter entfernt als die Grenzposition ist, wenn kein Bruch des Bearbeitungswerkzeugs (33) vorliegt.

2. Kontrolleinrichtung gemäß Anspruch 1, wobei das Bearbeitungswerkzeug (33) ein Gewindeformer ist.

3. Kontrolleinrichtung gemäß Anspruch 1, wobei das Bearbeitungswerkzeug (33) ein Gewindebohrer ist.

4. Kontrolleinrichtung gemäß einem der Ansprüche 1 bis 3, wobei der Tastkolben (24) eine Aussparung (41) aufweist, und die Verbindung des ersten Raums (26) und der Abblasöffnung (31) über die Aussparung (41) erfolgt, wenn sich der Tastkolben (24) in der Position befindet, die näher an dem zweiten Ende (29) ist als die Grenzposition.

5. Werkzeug (14) einer Stanzmaschine (1) mit mindestens einem Werkzeugteil (16, 32), wobei das Werkzeug (14) einen Kontrollzylinder (23) einer Kontrolleinrichtung gemäß einem der Ansprüche 1 bis 4 und ein Bearbeitungswerkzeug (33) aufweist.

6. Werkzeug (14) gemäß Anspruch 5, wobei das Werkzeug (14) mindestens zwei Werkzeugteile (16, 32) aufweist, und der Kontrollzylinder (23) in einem der Werkzeugteile (16, 32) und das Bearbeitungswerkzeug (33) in einem anderen der Werkzeugteile (16, 32) enthalten ist.

7. Werkzeug (14) gemäß Anspruch 5, wobei der Kontrollzylinder (23) und das Bearbeitungswerkzeug (33) in demselben des mindestens einen Werkzeugteils (16, 32) enthalten sind.

8. System aus einer Stanzmaschine (1) mit einer Steuerungsvorrichtung (40), einer oberen Werkzeugaufnahme (17) und einer unteren Werkzeugaufnahme (7), und einem Werkzeug (14) gemäß einem der Ansprüche 5 bis 7, das in die obere Werkzeugaufnahme (17) und/oder die untere Werkzeugaufnahme (7) aufnehmbar ist, wobei die Stanzmaschine (1) die Druckluftversorgungseinrichtung (19) und den ersten Druckschalter (20) einer Kontrolleinrichtung aufweist.

9. System gemäß Anspruch 8, wobei zumindest eine der Werkzeugaufnahmen (7, 17) mit einer Abfrageeinrichtung (22) zum Feststellen, ob ein Werkzeugteil in der Werkzeugaufnahme (7, 17) vorhanden ist, versehen ist, und die Abfrageeinrichtung (22) und der erste Druckschalter (20) parallel mit der Druckluftversorgungseinrichtung (19) verbunden sind.

10. Verfahren zum Überwachen eines Bruchs eines in einem Werkzeug (14) aufgenommenen Bearbeitungswerkzeugs (33) mit der Kontrolleinrichtung gemäß einem der Ansprüche 1 bis 4, das die folgenden Schritte aufweist:
- Ausfahren des Tastkolbens (24) mittels Einbringen von Luft mit einem gegenüber der Umgebung erhöhten Luftdruck in den Kontrollzylinder (23) durch dessen Versorgungsöffnung (30);
- Abfragen eines Ausfahrwegs des Tastkolbens (24).

11. Verfahren gemäß Anspruch 10, wobei der Ausfahrweg über
einen Schaltzustand des ersten Druckschalters (20) erfasst wird, wobei,
wenn das Bearbeitungswerkzeug (33) nicht gebrochen ist, der Tastkolben (24) so weit ausfährt, dass die Verbindung des ersten Raums (26) mit der Abblasöffnung (31) unterbrochen ist, so dass die Luft nicht durch die Abblasöffnung (31) ausströmen kann und der erhöhte Luftdruck an dem ersten Druckschalter (20) anliegt, und,
wenn das Bearbeitungswerkzeug (33) gebrochen ist, der Tastkolben (24) so weit ausfährt, dass die Verbindung des ersten Raums (26) mit der Abblasöffnung (31) erzeugt wird, so dass die Luft durch die Abblasöffnung (31) aus dem ersten Raum (26) strömen kann und ein Luftdruck, der geringer als der erhöhte Luftdruck ist, an dem ersten Druckschalter (20) anliegt.

12. Verfahren gemäß einem der Ansprüche 10 oder 11 mit einem System gemäß Anspruch 9, wobei die Abfrageeinrichtung (22) gleichzeitig mit der Luft mit dem erhöhten Luftdruck versorgt wird.

13. Verfahren gemäß einem der Ansprüche 10 bis 12 mit einem System gemäß einem der Ansprüche 8 oder 9, wobei die Werkzeugaufnahme (7, 17), in der das Werkzeugteil mit dem Bearbeitungswerkzeug (33) enthalten ist, in eine Werkzeugaufnahme-Abfrageposition gefahren wird.

14. Verfahren gemäß einem der Ansprüche 10 bis 13 mit einem System gemäß einem der Ansprüche 8 oder 9, wobei eine in der Stanzmaschine (1) vorgesehene Absaugvorrichtung (39) zum Absaugen von Spänen in dem Werkzeug (14) in Betrieb ist.

15. Verfahren gemäß einem der Ansprüche 10 bis 14 mit einem System gemäß einem der Ansprüche 8 oder 9, wobei die Kontrolle des Bruchs des Bearbeitungswerkzeugs (33) unmittelbar vor einem Auswechseln des Werkzeugs (14) erfolgt.

## Claims

1. Monitoring device for a tool in a punching machine (1) for monitoring a breakage of a machining tool (33) accommodated in the tool, comprising
an air pressure supply device (19),
a first pressure switch (20) having a pre-determinable switching pressure, and
a monitoring cylinder (23) with a tactile piston (24), wherein
the tactile piston (24) comprises a piston rod (25),
the tactile piston (24) is accommodated in the monitoring cylinder (23) such that it partitions a first space (26) between the tactile piston (24) and a first end (28) of the monitoring cylinder (23) and a second space (27) between the tactile piston (24) and a second end (29) of the monitoring cylinder (23),
the tactile piston (24) has a predetermined stroke in the monitoring cylinder (23) between the first end (28) and second end (29), and
a marginal position in which the piston rod (25) abuts to the machining tool (33) is provided for the tactile piston (24),
wherein the first space (26) has a supply orifice (30) connected to the air pressure supply device (19) and the first pressure switch (20), and the monitoring cylinder (23) has a discharge orifice (31), wherein
the discharge orifice (31) is arranged such
that it is connected to the first space (26) when the tactile piston (24) is located in a position which is closer to the second end (29) than the marginal position in case of a breakage of the machining tool (33), and
that its connection to the first space (26) is shut when the tactile piston (24) is located in the marginal position or when it is located farther away from the second end (29) than the marginal position when no breakage of the machining tool (33) exists.

2. Monitoring device according to claim 1, wherein the machining tool (33) is a forming tap.

3. Monitoring device according to claim 1, wherein the machining tool (33) is a tap drill.

4. Monitoring device according to any of the claims 1 to 3, wherein the tactile piston (24) comprises a notch (41), and the connection of the first space (26) and the discharge orifice (31) is effected by the notch (41) when the tactile piston (24) is located in the position closer to the second end (29) than the marginal position.

5. Tool (14) of a punching machine (1) with at least one tool part (16, 32), wherein the tool (14) comprises a monitoring cylinder (23) of a monitoring device according to any of the claims 1 to 4 and a machining tool (33).

6. Tool (14) according to claim 5, wherein the tool (14) comprises at least two tool parts (16, 32), and the monitoring cylinder (23) is included in one of the tool parts (16, 32) and the machining tool (33) is included in another one of the tool parts (16, 32).

7. Tool (14) according to claim 5, wherein the monitoring cylinder (23) and the machining tool (33) are included in the same of the at least one tool part (16, 32).

8. System of a punching machine (1) with a control device (40), an upper tool holder (17) and a lower tool holder (7), and a tool (14) according to any of the claims 5 to 7 which can be accommodated into the upper tool holder (17) and/or the lower tool holder (7), wherein the punching machine (1) comprises the air pressure supply device (19) and the first pressure switch (20) of a monitoring device.

9. System according to claim 8, wherein at least one of the tool holders (7, 17) is provided with a detection device (22) for detecting whether a tool part is present in the tool holder (7, 17), and the detection device (22) and the first pressure switch (20) are connected in parallel to the air pressure supply device (19).

10. Method for monitoring a breakage of a machining tool (33) accommodated in a tool (14) by the monitoring device according to any of the claims 1 to 4, comprising the following steps:
- extending the tactile piston (24) by introducing air having an air pressure increased with respect to the environment into the monitoring cylinder (23) through its supply orifice (30);
- detecting an extension stroke of the tactile piston (24).

11. Method according to claim 10, wherein the extension stroke is detected by a switching state of the first pressure switch (20), wherein
when the machining tool (33) is not broken, the tactile piston (24) extends as much as the connection of the first space (26) to the discharge orifice (31) is shut so that the air cannot escape through the discharge orifice (31) and the increased air pressure is applied to the first pressure switch (20), and
when the machining tool (33) is broken, the tactile piston (24) extends as far as the connection of the first space (26) to the discharge orifice (31) is created so that the air can escape from the first space (26) through the discharge orifice (31) and an air pressure which is lower than the increased air pressure is applied to the first pressure switch (20).

12. Method according to any of the claims 10 or 11 with a system according to claim 9, wherein the detection device (22) is supplied simultaneously with the air having the increased air pressure.

13. Method according to any of the claims 10 to 12 with a system according to any of the claims 8 or 9, wherein the tool holder (7, 17) in which the tool part having the machining tool (33) is included is moved into a tool holder query position.

14. Method according to any of the claims 10 to 13 with a system according to any of the claims 8 or 9, wherein an exhaust device (39) provided in the punching machine (1) for exhausting chips in the tool (14) operates.

15. Method according to any of the claims 10 to 14 with a system according to any of the claims 8 or 9, wherein the monitoring of the breakage of the machining tool (33) happens directly before an exchange of the tool (14).

## Revendications

1. Dispositif de contrôle d'un outil dans une poinçonneuse (1) destiné à contrôler une rupture d'un outil d'usinage (33) logé dans l'outil, comprenant :
un dispositif d'alimentation en air comprimé (19),
une premier commutateur manométrique (20) ayant une pression de commutation prédéfinie, et
un cylindre de contrôle (23) muni d'un piston palpeur (24),
dans lequel
le piston palpeur (24) comporte une tige de piston (25),
le piston palpeur (24) est logé dans le cylindre de contrôle (23) de façon à subdiviser une première chambre (26) entre le piston palpeur (24) et une première extrémité (28) du cylindre de contrôle (23) et une seconde chambre (27) entre le piston palpeur (24) et une seconde extrémité (29) du cylindre de contrôle (23),
le piston palpeur (24) a une course prédéfinie dans le cylindre de contrôle (23) entre la première extrémité (28) et la seconde extrémité (29), et il est prévu une position limite du piston palpeur (24) dans laquelle la tige de piston (25) vient en butée contre l'outil d'usinage (33),
la première chambre (26) comprend une ouverture d'alimentation (30) qui est reliée au dispositif d'alimentation en air comprimé (19) et au premier interrupteur anométrique (20) et le cylindre de contrôle (23) comporte une ouverture de soufflage (31),
l'ouverture de soufflage (31) est montée de sorte qu'elle soit en liaison avec la première chambre (26) lorsque le piston palpeur (24) se trouve dans une position qui, en cas de rupture de l'outil d'usinage (33) est plus proche de la seconde extrémité (29) que la position limite, et
que sa liaison avec la première chambre (26) soit interrompue lorsque le piston palpeur (24) se trouve dans la position limite ou est plus éloigné de la seconde extrémité (29) que la position limite en l'absence de rupture de l'outil de travail (33).

2. Dispositif de contrôle conforme à la revendication 1,
dans lequel l'outil d'usinage (33) est un taraud à refouler.

3. Dispositif de contrôle conforme à la revendication 1,
dans lequel l'outil d'usinage (33) est un taraud.

4. Dispositif de contrôle conforme à l'une des revendications 1 à 3, dans lequel le piston palpeur (24) comporte un évidement (41) et la liaison entre la première chambre (26) et l'ouverture de soufflage (31) s'effectue par l'intermédiaire de cet évidement (41) lorsque le piston palpeur (24) se trouve dans la position qui est plus proche de la seconde extrémité (29) que la position limite.

5. Outil (14) d'une poinçonneuse (1) comprenant au moins une partie d'outil (16, 32), l'outil (14) comprenant un cylindre de contrôle (23) d'un dispositif de contrôle conforme à l'une des revendications 1 à 4 et un outil d'usinage (33).

6. Outil (14) conforme à la revendication 5, comprenant au moins deux parties d'outil (16, 32), le cylindre de contrôle (23) étant logé dans l'une des parties d'outil (16, 32) et l'outil d'usinage (33) étant logé dans l'autre partie d'outil (16, 32).

7. Outil (14) conforme à la revendication 5, dans lequel le cylindre de contrôle (23) et l'outil d'usinage (33) sont logés dans la même partie d'outil (16, 32).

8. Système constitué d'une poinçonneuse (1) équipée d'un dispositif de commande (40), d'un logement d'outil supérieur (17) et d'un logement d'outil inférieur (7) et d'un outil (14) conforme à l'une des revendications 5 à 7 pouvant être logé dans le logement d'outil supérieur (17) et/ou dans le logement d'outil inférieur (7), la poinçonneuse (1) comprenant le dispositif d'alimentation en air comprimé (19) et le premier interrupteur manométrique (20) d'un dispositif de contrôle.

9. Système conforme à la revendication 8,
dans lequel
au moins l'un des logements d'outil (7, 17) est équipé d'un dispositif d'interrogation (22) pour déterminer si une partie d'outil est située dans le logement de réception d'outil (7, 17), et le dispositif d'interrogation (22) et le premier interrupteur manométrique (20) sont reliés en parallèle avec le dispositif d'alimentation en air comprimé (19).

10. Procédé permettant de surveiller une rupture d'un outil d'usinage (33) logé dans un outil (14) à l'aide d'un dispositif de contrôle conforme à l'une des revendications 1 à 4,
**caractérisé en ce qu'**
il comprend les étapes suivantes consistant à :
déployer le piston palpeur (24) par amenée d'air sous une pression supérieure à la pression ambiante dans le cylindre de contrôle (23) par son ouverture d'alimentation (30),
interroger la course de déploiement du piston palpeur (24).

11. Procédé conforme à la revendication 10,
selon lequel la course de déploiement est détectée par l'intermédiaire de l'état de commutation du premier interrupteur manométrique (20), et, lorsque l'outil d'usinage (33) n'est pas rompu, le piston palpeur (24) se déploie dans une mesure telle que la liaison de la première chambre (26) avec l'ouverture de soufflage (31) soit coupée, de sorte que l'air ne puisse pas s'écouler par l'ouverture de soufflage (31) et qu'une pression d'air augmentée s'applique sur le premier interrupteur manométrique (20), et
lorsque l'outil d'usinage (33) est rompu le piston palpeur (24) se déploie dans une mesure telle qu'une liaison de la première chambre (26) avec l'ouverture de soufflage (31) soit obtenue de sorte que l'air puisse s'écouler par l'ouverture de soufflage (31) pour sortir de la première chambre (26) et qu'une pression d'air inférieure à la pression d'air augmentée s'applique sur le premier interrupteur manométrique (20).

12. Procédé conforme à l'une des revendications 10 et 11,
comprenant un système conforme à la revendication 9,
selon lequel le dispositif d'interrogation (22) est simultanément alimenté avec de l'air sous la pression d'air augmentée.

13. Procédé conforme à l'une des revendications 10 à 12,
comprenant un système conforme à l'une des revendications 8 et 9, selon lequel le logement de réception d'outil (7, 17) dans lequel est logée la partie d'outil comprenant l'outil d'usinage (33) est déplacé dans une position d'interrogation du logement de réception d'outil.

14. Procédé conforme à l'une des revendications 10 à 13,
comprenant un système conforme à l'une des revendications 8 et 9 selon lequel un dispositif d'aspiration (39) monté dans la poinçonneuse (1) est en fonctionnement dans l'outil (14) pour aspirer des copeaux.

15. Procédé conforme à l'une des revendications 10 à 14,
comprenant un système conforme à l'une des revendications 8 et 9, selon lequel le contrôle de la rupture de l'outil d'usinage (33) est effectué immédiatement avant un échange de l'outil (14).
